# EUROPÄISCHE PATENTSCHRIFT

(11) **EP 4 328 060 B1**
(45) Veröffentlichungstag und Bekanntmachung des Hinweises auf die Patenterteilung: **16.09.2026**
(21) Anmeldenummer: 23179433.0
(22) Anmeldetag: 15.06.2023
(51) Int. Cl.: B60K 17/28, F16H 3/12, F16H 61/04, F16H 3/089

(54) **LANDWIRTSCHAFTLICHE ARBEITSMASCHINE**
AGRICULTURAL MACHINE
MACHINE AGRICOLE

(30) Priorität: 24.08.2022 DE 102022121381
(43) Veröffentlichungstag der Anmeldung: 28.02.2024
(73) Patentinhaber: CLAAS Tractor S.A.S., 78141 Vélizy-Villacoublay Cedex (FR)
(72) Erfinder: Fedde, Thomas, 33129 Delbrück (DE); Wecker, Timo, 33181 Bad Wünnenberg (DE); Rongvaux, Laurent, 54800 Tronville (FR)
(74) Vertreter: CLAAS Gruppe

(56) Entgegenhaltungen:
- US-A- 3 507 372
- US-A- 4 287 778

## Beschreibung

Das technische Gebiet, auf das sich die beanspruchte Erfindung bezieht, betrifft eine landwirtschaftliche Arbeitsmaschine, insbesondere einen Traktor, gemäß dem Oberbegriff des Anspruchs 1.

Landwirtschaftliche Arbeitsmaschinen, wie beispielsweise Traktoren, sind mit einem Antriebsmotor ausgestattet, der unter anderem dazu nutzbar ist, ein an den Traktor anbaubares Arbeitsgerät anzutreiben. Aus der Praxis der Landtechnik sind vielfältige derartiger Arbeitsgeräte bekannt, wie beispielsweise Ballenpressen, Schwader, Wender, Mähwerke, Ladewagen und dergleichen. Den genannten Arbeitsgeräten ist gemein, dass diese über eine Zapfwelle des schleppenden Traktors antreibbar sind, d.h. die dem jeweils angebauten Arbeitsgerät zugeordneten Arbeits- und/oder Förderaggregate werden unter Nutzung einer Leistung des Antriebsmotors des Traktors betrieben.

Bei bekannten Zapfwellengetriebekonzepten kann der Antriebsmotor beispielsweise über eine Getriebeeingangswelle und Getriebegangstufen mit der Zapfwelle verbunden werden. Um eine für das Arbeitsgerät gewünschte Normdrehzahl der Zapfwelle zu erzielen muss der Antriebsmotor zunächst im Bereich seiner Nenndrehzahl betrieben werden. Folglich gibt die für den Arbeitsprozess vorgesehene Zapfwellendrehzahl die Drehzahl des Antriebsmotors vor.

Um bei Zapfwellenarbeiten mit geringem Leistungsbedarf mit abgesenkter Antriebsmotordrehzahl zu arbeiten und auf diese Weise den Betriebspunkt im Motorkennfeld in Bereiche mit geringerem spezifischen Kraftstoffverbrauch zu verschieben, existieren Sparzapfwellen, sogenannte E-Zapfwellen, mit entsprechend angepasster Übersetzung. Sowohl die herkömmlichen Standard-Zapfwellengetriebegangstufen als auch die E-Zapfwellengetriebegangstufen lassen sich üblicherweise jedoch nicht unter Last schalten, sondern können nur im Stillstand des Zapfwellengetriebes geschaltet werden, da in aller Regel keine Einrichtung zum Synchronisieren vorhanden ist.

Darüber hinaus führt das Anlaufen von angebauten Arbeitsgeräten mit hohen Trägheitsmomenten, beispielsweise bei Quaderballenpressen mit Schwungradmassen von 300 kg oder mehr, und/oder Lastmomenten, beispielsweise bei Futtermischwagen, zu äußerst hohen Belastungen der Kupplung beim Kupplungsvorgang, da aufgrund der fehlenden Lastschaltbarkeit in einer Getriebegangstufe mit einer geringen Übersetzung angefahren werden muss. Sofern es zu einer Arbeitsunterbrechung kommt muss ein erneuter Anlaufvorgang für das Arbeitsgerät initiiert werden. Ist das Arbeitsgerät zusätzlich durch Material blockiert, wird dieser erneute Anlaufvorgang des Arbeitsgeräts erheblich erschwert oder ist unter Umständen überhaupt nicht möglich. Scheitert ein Anlaufvorgang, werden oftmals mehrere weitere Anlaufvorgänge unternommen, wodurch die Kupplung durch wiederholte hohe Energieeinträge enorm belastet wird und unter Umständen versagen kann.

Aus der DE 10 2011 084 623 A1 ist ein Zapfwellengetriebe bekannt. Bei diesem sind eine Getriebeantriebswelle sowie zwei damit kuppelbare Eingangswellen koaxial auf einer Achse angeordnet, um über verschiedene wählbare Getriebegangstufen, die jeweils durch eine Stirnradpaarung gebildet werden, eine dazu versetzte Zapfwelle antreiben zu können. Das so beschriebene Zapfwellengetriebe ist zumindest teilweise (jeweils bei Wechsel der Eingangswelle) unter Last schaltbar.

Weiterhin offenbart die US 3,507,372 A eine landwirtschaftliche Arbeitsmaschine, welche unter den Wortlaut des Oberbegriffs des Patentanspruchs 1 fällt.

Zapfwellengetriebe, die unter Last schaltbar sind, sind demnach grundsätzlich bekannt. Allerdings sind solche Zapfwellengetriebe durch ihre hohe Anzahl an mechanischen Komponenten, die für den Schaltvorgang unter Last erforderlich sind, oftmals äußerst komplex und weisen in einigen Fällen einen hohen Bauraumbedarf auf, der im Bereich hinter der Hinterachse, in dem das Zapfwellengetriebe herkömmlicherweise verbaut ist, in aller Regel nicht zur Verfügung steht.

Ausgehend hiervon ist es demnach die Aufgabe der vorliegenden Erfindung eine landwirtschaftliche Arbeitsmaschine mit einem Antriebsmotor und einem Zapfwellengetriebe anzugeben, bei der unabhängig von einer Architektur des Zapfwellengetriebes ein Schalten von Getriebegangstufen während des Antriebs eines an die landwirtschaftliche Arbeitsmaschine angebauten Arbeitsgeräts, insbesondere während eines Anlaufvorgangs des Arbeitsgeräts, möglich ist, ohne dass zusätzliche mechanische Komponenten hierfür vorgesehen sein müssen.

Diese Aufgabe wird erfindungsgemäß durch die Merkmale des unabhängigen Patentanspruchs 1 gelöst, wobei vorteilhafte Weiterbildungen der erfindungsgemäßen landwirtschaftlichen Arbeitsmaschine Gegenstand der entsprechenden abhängigen Patentansprüche 2 bis 14 sind.

Demnach betrifft die vorliegende Erfindung eine landwirtschaftliche Arbeitsmaschine, insbesondere einen Traktor, mit einem Antriebsmotor und einem Zapfwellengetriebe, die mittels einer schaltbaren Kupplung miteinander verbunden sind. Das Zapfwellengetriebe umfasst eine Getriebeeingangswelle und eine als Zapfwelle ausgebildete Getriebeausgangswelle zum Antrieb eines an die landwirtschaftliche Arbeitsmaschine anbaubaren Arbeitsgeräts. Die Getriebeeingangswelle ist über eine erste schaltbare Getriebegangstufe oder eine zweite schaltbare Getriebegangstufe mit der Zapfwelle in Antriebsverbindung bringbar. Das Zapfwellengetriebe umfasst weiterhin eine Schalteinrichtung, die dazu eingerichtet ist, zwischen der ersten Getriebegangstufe, der zweiten Getriebegangstufe und einer Neutralstellung des Zapfwellengetriebes zu schalten, und eine mit der Getriebeeingangswelle in Wirkverbindung stehende und mit der Zapfwelle über das Zuschalten der ersten oder der zweiten Getriebegangstufe in Wirkverbindung bringbare Bremseinrichtung. Die landwirtschaftliche Arbeitsmaschine ist dadurch gekennzeichnet, dass sie eine Steuereinrichtung umfasst, die dazu eingerichtet ist, während des Antriebs eines an die landwirtschaftliche Arbeitsmaschine angebauten Arbeitsgeräts für einen Schaltvorgang aus der ersten Getriebegangstufe in die zweite Getriebegangstufe in Abhängigkeit einer Zapfwellendrehzahl wahlweise entweder den Antriebsmotor zur Drehzahländerung oder die Bremseinrichtung zum Bremsen der Getriebeeingangswelle und der Zapfwelle anzusteuern.

Durch die erfindungsgemäße Steuereinrichtung wird es demnach möglich die Getriebegangstufen eines Zapfwellengetriebes unabhängig von der Architektur des Zapfwellengetriebes zu schalten, indem entweder über eine Änderung der Motordrehzahl oder ein Abbremsen der Getriebeeingangswelle und der Zapfwelle eine Synchronisation der Getriebeeingangswelle und der Zapfwelle unter Berücksichtigung der einzulegenden Getriebegangstufe erzielt wird. Es sind somit keinerlei zusätzlichen mechanischen Komponenten erforderlich, die eine mechanische Synchronisation erlauben. Vielmehr wird über die Ansteuerung des Antriebsmotors oder der Bremseinrichtung des Zapfwellengetriebes die Synchronisation erzielt.

Die Art der auszuführenden Synchronisation ist dabei abhängig von der Zapfwellendrehzahl zum Zeitpunkt der Durchführung des Schaltvorgangs. Fällt die Zapfwellendrehzahl beispielsweise während des Schaltvorgangs aufgrund der Trägheit der Zapfwelle zu schnell ab, kann die Synchronisation über eine Änderung der Antriebsmotordrehzahl nicht realisiert werden, da der Antriebsmotor nicht in einem Drehzahlbereich betrieben werden kann, der eine Synchronisation erlaubt. In einem solchen Fall muss dann sowohl die Getriebeeingangswelle als auch die Zapfwelle über die Bremseinrichtung abgebremst werden, um die Synchronisation durchzuführen. Fällt die Zapfwellendrehzahl hingegen während des Schaltvorgangs nicht oder nur unwesentlich ab, da die Zapfwelle beispielsweise von dem Antriebsstrang des Arbeitsgeräts weiter angetrieben wird, so kann die Synchronisation über eine Ansteuerung des Antriebsmotors zur Änderung der Drehzahl realisiert werden. Die Steuereinrichtung erzeugt für die Ansteuerung jeweils Signale, die an die entsprechenden Einrichtungen, also entweder den Antriebsmotor oder die Bremseinrichtung, zur Ansteuerung derselben übertragen werden.

Insbesondere für einen Anlaufvorgang eines an die landwirtschaftliche Arbeitsmaschine angebauten Arbeitsgeräts, insbesondere in solchen Fällen, wenn das Zapfwellengetriebe eine Architektur aufweist, die ein Schalten unter Last normalerweise nicht erlaubt, entfaltet die vorliegende Erfindung ihre Wirkung. So kann beispielsweise der Anlaufvorgang des Arbeitsgeräts zunächst in einer Getriebegangstufe mit einer hohen Übersetzung (erste Getriebegangstufe) erfolgen. Sobald der Anlaufvorgang des Arbeitsgeräts abgeschlossen ist, was beispielsweise über eine mittels der Steuereinrichtung vorgenommene Auswertung eines Drehzahlsignals, das von einem Drehzahlsensor am Anbaugerät bereitgestellt wird, detektiert werden kann, wird dann von der Getriebegangstufe mit der hohen Übersetzung (erste Getriebegangstufe) in eine Getriebegangstufe mit einer niedrigeren Übersetzung (zweite Getriebegangstufe) geschaltet, die für die Durchführung eines Arbeitsauftrags mit dem Arbeitsgerät geeignet ist. Der Schaltvorgang unter Last wird dabei mittels der Steuereinrichtung ermöglicht, die, wie zuvor beschrieben, in Abhängigkeit der Zapfwellendrehzahl entweder eine Synchronisation über eine Ansteuerung des Antriebsmotors oder eine Ansteuerung der Bremseinrichtung realisiert.

Der gesamte Schaltvorgang kann dabei mittels der Steuereinrichtung automatisiert erfolgen, ohne dass ein Bediener der landwirtschaftlichen Arbeitsmaschine hierzu aktiv Einfluss nehmen muss. Vielmehr wird mittels der Steuereinrichtung automatisch ein Abschluss des Anlaufvorgangs detektiert und der Schaltvorgang aus der ersten Getriebegangstufe in die zweite Getriebegangstufe automatisiert durchgeführt.

Die erfindungsgemäße Lösung ist nicht nur auf eine Anwendung für Zapfwellengetriebe beschränkt, die normalerweise keine Möglichkeit zum Schalten unter Last aufweisen. Genauso gut kann die erfindungsgemäße Lösung auch dort ihre Wirkung entfalten, wo ein Zapfwellengetriebe vorhanden ist, dass bereits unter Last zu schalten ist. Mittels der Steuereinrichtung und der drehzahlabhängigen Ansteuerung des Antriebsmotors oder der Bremseinrichtung kann eine vorhandene mechanische Synchronisationseinrichtung bei solchen Getriebearchitekturen geschont werden.

Dadurch, dass die Anlaufvorgänge in einer Getriebegangstufe mit hoher Übersetzung durchgeführt werden können, können kraftvollere Anlaufvorgänge erfolgen, wodurch Arbeitsgeräte mit hohen Schwungmassengewichten und/oder blockierte Arbeitsgeräte besonders effektiv und unter Schonung der den Antriebsmotor und das Zapfwellengetriebe verbindenden Kupplung erfolgen.

Gemäß einer vorteilhaften Weiterbildung der Erfindung ist vorgesehen, dass der Schaltvorgang aus der ersten Getriebegangstufe in die zweite Getriebegangstufe ein Schalten aus der ersten Getriebegangstufe in die Neutralstellung des Zapfwellengetriebes und aus der Neutralstellung des Zapfwellengetriebes in die zweite Getriebegangstufe umfasst.

Vorzugsweise ist die Steuereinrichtung dazu eingerichtet, dass ein Bestimmen der Zapfwellendrehzahl und eine Ansteuerung des Antriebsmotors oder der Bremseinrichtung mittels der Steuereinrichtung in der Neutralstellung während des Schaltvorgangs aus der ersten Getriebegangstufe in die zweite Getriebegangstufe erfolgt.

Gemäß einer vorteilhaften Weiterbildung der Erfindung ist vorgesehen, dass die Steuereinrichtung dazu eingerichtet ist, die Kupplung für den Schaltvorgang aus der ersten Getriebegangstufe in die zweite Getriebegangstufe derart anzusteuern, dass die Kupplung unmittelbar vor einem Schalten aus der ersten Getriebegangstufe in die Neutralstellung des Zapfwellengetriebes geöffnet ist und wahlweise in der Neutralstellung des Zapfwellengetriebes oder nach einem Schalten aus der Neutralstellung des Zapfwellengetriebes in die zweite Getriebegangstufe geschlossen ist.

Es ist auch möglich, dass die Kupplung in der Neutralstellung des Zapfwellengetriebes vor dem Schaltvorgang in die zweite Getriebegangstufe mittels der Steuereinrichtung derart angesteuert wird, dass die Kupplung zwar geschlossen wird, der Druck der Kupplung allerdings so gering ist, dass nur ein reduziertes Drehmoment von der Kupplung übertragen werden kann. Nach dem Schaltvorgang in die zweite Getriebegangstufe wird die Kupplung dann vollständig geschlossen, so dass ein maximales Drehmoment übertragen werden kann.

Sofern der Synchronisierungsvorgang über eine Ansteuerung des Antriebsmotors zwecks einer Antriebsmotordrehzahländerung erfolgt, ist die Kupplung in der Neutralstellung des Zapfwellengetriebes geschlossen, sodass die Getriebeeingangswelle mittels des Antriebsmotors mit der eingestellten Antriebsmotordrehzahl angetrieben wird. Die Getriebeeingangswelle kann dadurch mit einer Drehzahl angetrieben werden, die unter Berücksichtigung des Übersetzungsverhältnisses der zweiten Getriebegangstufe zu einer mit der gemessenen Zapfwellendrehzahl im wesentlichen entsprechenden Zapfwellendrehzahl führen würde. Sofern der Synchronisierungsvorgang hingegen über eine Ansteuerung der Bremseinrichtung erfolgt, ist die Kupplung in der Neutralstellung des Zapfwellengetriebes geöffnet, sodass die Getriebeeingangswelle und die Zapfwelle mittels der Bremseinrichtung abgebremst werden können.

Gemäß einer vorteilhaften Weiterbildung der Erfindung ist vorgesehen, dass die erste Getriebegangstufe und die zweite Getriebegangstufe jeweils als Stirnradstufe mit einem Festrad und einem Losrad ausgebildet sind. Das Festrad ist dabei wahlweise auf der Getriebeeingangswelle oder der Zapfwelle angeordnet und das Losrad entsprechend wahlweise auf der Zapfwelle oder der Getriebeeingangswelle.

Insbesondere kann vorgesehen sein, dass das Festrad auf der Getriebeeingangswelle und das Losrad auf der Zapfwelle angeordnet ist.

Diese Ausgestaltung sorgt dafür, dass die Drehbewegung der Zapfwelle in einer Neutralstellung des Zapfwellengetriebes lediglich durch die eigenen Trägheit und gegebenenfalls die Trägheit des Antriebsstrangs des Arbeitsgeräts beeinflusst wird.

Vorzugsweise ist die Steuereinrichtung dazu eingerichtet, für den Schaltvorgang aus der ersten Getriebegangstufe in die zweite Getriebegangstufe den Antriebsmotor derart anzusteuern, dass eine Drehzahl des der zweiten Getriebegangstufe zugeordneten Losrads zumindest im Wesentlichen mit der Zapfwellendrehzahl übereinstimmt.

Wie bereits angedeutet, wird durch diese Beeinflussung der Antriebsmotordrehzahl eine Synchronisation von Getriebeeingangswelle und Zapfwelle realisiert, ohne dass hierfür eine mechanische Synchronisationseinrichtung zwingend erforderlich ist. Sobald das Losrad und die Zapfwelle im Wesentlichen die gleiche Drehzahl aufweisen, kann mittels der Schalteinrichtung aus der Neutralstellung des Zapfwellengetriebes problemlos in die zweite Getriebegangstufe geschaltet werden.

Gemäß einer vorteilhaften Weiterbildung der Erfindung ist vorgesehen, dass die Steuereinrichtung dazu eingerichtet ist, für den Schaltvorgang aus der ersten Getriebegangstufe in die zweite Getriebegangstufe die Bremseinrichtung derart anzusteuern, dass eine Drehzahl der Getriebeeingangswelle und die Zapfwellendrehzahl $0 \frac{1}{min}$ beträgt.

Durch das Abbremsen der Getriebeeingangswelle und der Zapfwelle kann, wie zuvor beschrieben, ebenfalls eine Synchronisation realisiert werden. Sobald die Getriebeeingangswelle, somit auch das Festrad und das Losrad der Getriebegangstufen, und die Zapfwelle stillstehen, kann mittels der Schalteinrichtung aus der Neutralstellung des Zapfwellengetriebes problemlos in die zweite Getriebegangstufe geschaltet werden.

Gemäß einer vorteilhaften Weiterbildung der Erfindung ist vorgesehen, dass die erste Getriebegangstufe eine 540er-Zapfwellengangstufe ist und die zweite Getriebegangstufe eine 1000er-Zapfwellengangstufe ist.

Gemäß einer vorteilhaften Weiterbildung der Erfindung ist vorgesehen, dass die Steuereinrichtung dazu eingerichtet, einen definierten Grenzwert für die Zapfwellendrehzahl zu berücksichtigen, wobei die Steuereinrichtung ferner dazu eingerichtet ist, den Antriebsmotor anzusteuern, sofern die Zapfwellendrehzahl dem definierten Grenzwert entspricht oder diesen übersteigt, oder die Bremseinrichtung anzusteuern, sofern die Zapfwellendrehzahl den definierten Grenzwert unterschreitet.

Gemäß einer vorteilhaften Weiterbildung der Erfindung ist vorgesehen, dass die Steuereinrichtung mit einer ersten Sensoreinrichtung zum Bestimmen der Zapfwellendrehzahl und zumindest einer zweiten Sensoreinrichtung zum Bestimmen einer Drehzahl des Antriebsmotors und/oder einer Drehzahl der Getriebeeingangswelle verbunden ist.

Die Verbindung von Steuereinrichtung, erster und zweiter Sensoreinrichtung erlaubt eine hochpräzise automatisierte Ansteuerung der Einrichtungen zwecks der Synchronisation. Die Steuereinrichtung erhält von den Sensoreinrichtungen die gemessenen Drehzahlwerte, wertet diese aus und steuert basierend auf der Auswertung dieser Sensorsignale entweder den Antriebsmotor oder die Bremseinrichtung an.

Gemäß einer vorteilhaften Weiterbildung der Erfindung ist vorgesehen, dass die schaltbare Kupplung als Reibkupplung, vorzugsweise als Lamellenkupplung, ausgebildet ist.

Gemäß einer vorteilhaften Weiterbildung der Erfindung ist vorgesehen, dass die Schalteinrichtung Synchronisierungselemente umfasst.

Wie bereits angedeutet, kann das Zapfwellengetriebe auch eine Schalteinrichtung mit Synchronisierungselementen aufweisen, wodurch eine mechanische Synchronisation für ein Schalten unter Last realisiert wird. Die erfindungsgemäße Lösung kann bei einer solchen Architektur allerdings ebenfalls Vorteile entfalten, indem die Belastung auf die Synchronisierungselemente durch die Ansteuerung des Antriebsmotors oder der Bremseinrichtung erheblich reduziert wird. Hierdurch kann die Lebensdauer des Zapfwellengetriebes insgesamt, zumindest jedoch die Lebensdauer der Schalteinrichtung, erheblich gesteigert werden.

Gemäß einer vorteilhaften Weiterbildung der Erfindung ist vorgesehen, dass das Zapfwellengetriebe eine dritte Getriebegangstufe und eine vierte Getriebegangstufe umfasst, wobei die Schalteinrichtung dazu eingerichtet ist, zwischen der ersten Getriebegangstufe, der zweiten Getriebegangstufe, der dritten Getriebegangstufe, der vierten Getriebegangstufe und der Neutralstellung des Zapfwellengetriebes zu schalten.

Vorzugsweise ist die dritte Getriebegangstufe eine 540erE-Zapfwellengangstufe und die vierte Getriebegangstufe eine 1000erE-Zapfwellengangstufe.

Weiter vorzugsweise umfasst das Zapfwellengetriebe eine fünfte Getriebegangstufe, wobei die Schalteinrichtung dazu eingerichtet ist, zwischen der ersten Getriebegangstufe, der zweiten Getriebegangstufe, der dritten Getriebegangstufe, der vierten Getriebegangstufe, der fünften Getriebegangstufe und der Neutralstellung des Zapfwellengetriebes zu schalten.

Die fünfte Getriebegangstufe ist insbesondere eine 1300er-Zapfwellengangstufe.

Durch eine Ausgestaltung des Zapfwellengetriebes mit vier oder fünf Getriebegangstufen können verschiedenste an die landwirtschaftliche Arbeitsmaschine angebaute Arbeitsgeräte betrieben werden. Beispielsweise ist es vorstellbar, dass in einigen Situationen ein Anlaufvorgang mit einer 540er- oder einer 540erE-Zapfwellengangstufe erfolgt und anschließend in eine 1000er-, 1000erE- oder 1300er-Zapfwellengangstufe geschaltet werden soll. Weiterhin ist es möglich, dass bei einem Antrieb des Arbeitsgeräts, während der Durchführung eines Arbeitsauftrags, aufgrund einer Betriebssituation aus der 1000er-, 1000erE- oder 1300er-Zapfwellengangstufe in die 540er- oder 540erE-Zapfwellengangstufe geschaltet werden soll. Für all diese Schaltvorgänge ist es möglich, die erfindungsgemäße Steuereinrichtung zur Ansteuerung des Antriebsmotors oder der Bremseinrichtung entsprechend zu nutzen.

Die erfindungsgemäße Aufgabe wird ferner durch eine Kombination aus einer landwirtschaftlichen Arbeitsmaschine, insbesondere einem Traktor, und einem an die landwirtschaftliche Arbeitsmaschine angebauten Arbeitsgerät, insbesondere einer Quaderballenpresse, gemäß dem Patentanspruch 15 gelöst.

Die vorliegende Erfindung wird nachstehend anhand der in den Figuren abgebildeten Ausführungsformen näher beschrieben.

Es zeigen:
- FIG. 1: eine schematische und exemplarische Darstellung einer erfindungsgemäßen landwirtschaftlichen Arbeitsmaschine in Gestalt eines Traktors und eines daran angebauten Arbeitsgeräts in Gestalt einer Quaderballenpresse; und
- FIG. 2: eine vereinfachte Prinzipdarstellung einer Ausführungsform der erfindungsgemäßen Kombination aus landwirtschaftlicher Arbeitsmaschine und angebautem Arbeitsgerät gemäß FIG. 1.

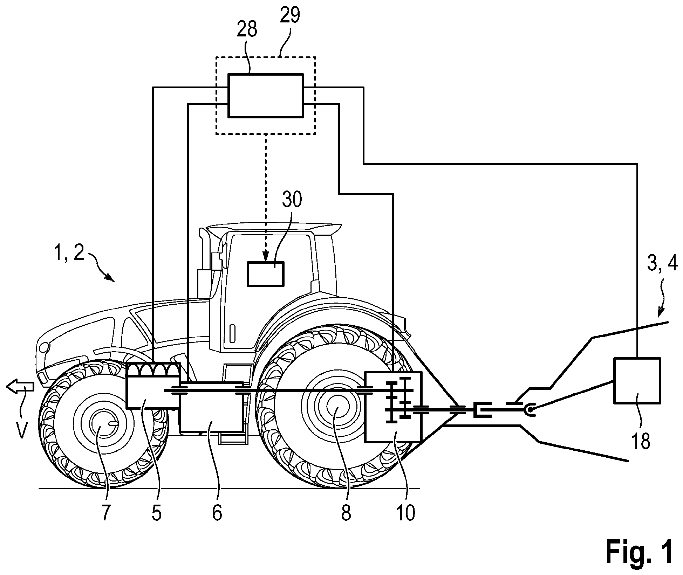

FIG. 1 zeigt eine schematische und exemplarische Darstellung einer erfindungsgemäßen landwirtschaftlichen Arbeitsmaschine 1, hier und vorzugsweise in Gestalt eines Traktors 2, in schematischer Ansicht von der Seite. An die landwirtschaftliche Arbeitsmaschine 1 ist ein nur teilweise dargestelltes Arbeitsgerät 3 angebaut, bei dem es sich hier und vorzugsweise um eine Quaderballenpresse 4 handelt. In vergleichbarer Weise kann an die landwirtschaftliche Arbeitsmaschine 1 ein anderes Arbeitsgerät 3 angebaut sein. Im Folgenden wird die Erfindung jedoch anhand eines Traktors 2 mit angebauter Quaderballenpresse 4 beschrieben.

Der Traktor 2 weist frontseitig einen Antriebsmotor 5 auf, bei dem es sich beispielsweise um einen Verbrennungsmotor handelt. Bei dem Antriebsmotor 5 kann es sich auch um einen oder mehrere Elektromotoren oder eine Kombination aus einem Verbrennungsmotor und einem oder mehreren Elektromotoren handeln. Im Betrieb stellt der Antriebsmotor 5 eine Antriebsleistung bereit, die zum Antrieb verschiedener Antriebs- und/oder Arbeitsaggregate des Traktors 2 zur Verfügung steht. Unter anderem ist die Antriebsleistung des Antriebsmotors 5 für einen Fahrantrieb sowie für einen Zapfwellenantrieb bei dem Traktor 2 nutzbar.

Der Antriebsmotor 5 ist zu diesem Zweck über eine - in den FIGs. nicht dargestellte - Kupplung mit einem Fahrgetriebe 6 in Antriebsverbindung bringbar, das wiederum über eine - in den FIGs. nicht dargestellte - Welle mit einer oder beiden Achsen 7, 8 des Traktors 2 antriebsverbunden ist, um den Traktor 2 beispielsweise in einer durch den vor dem Traktor 2 gezeichneten Richtungspfeil angezeigten Vorwärtsrichtung v in Fahrt zu setzen. Auf für sich gesehen bekannte und daher hier nicht näher zu erläuternde Weise lässt sich das Fahrgetriebe 6 mit unterschiedlicher Übersetzung betreiben, so dass eine Abtriebsdrehzahl des Antriebsmotors 5 abhängig von der gewählten Übersetzung des Fahrgetriebes 6 in unterschiedlichen Vorschub an der oder den Achsen 7, 8 - und somit in eine unterschiedliche Fahrgeschwindigkeit v des Traktors 2 - umgesetzt wird. Das Fahrgetriebe 6 kann unterschiedlicher Bauart sein. Bevorzugt handelt es sich dabei um ein Getriebe, dessen Übersetzung stufenlos veränderlich ist.

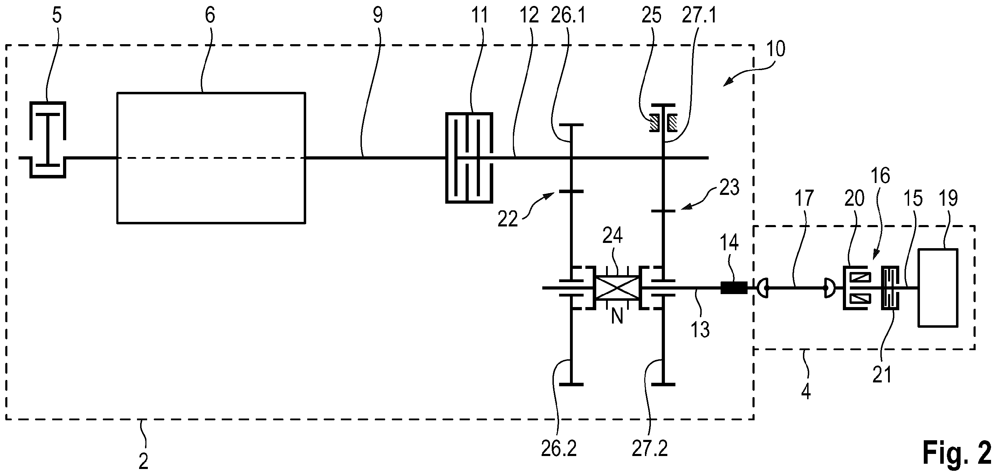

Der Antriebsmotor 5 treibt daneben über eine Welle 9 ein hinter einer Hinterachse 8 angeordnetes Zapfwellengetriebe 10 an. Das Zapfwellengetriebe 10 ist mit dem Antriebsmotor 5 bzw. der Welle 9 über eine schaltbare Kupplung 11 verbunden, die hier und vorzugsweise als Reibkupplung, insbesondere Lamellenkupplung, ausgeführt ist. Das Zapfwellengetriebe 10 umfasst eine Getriebeeingangswelle 12 und eine als Zapfwelle ausgebildete Getriebeausgangswelle 13 zum Antrieb der angebauten Quaderballenpresse 4. Die Zapfwelle 13 ist zum Antrieb der angebauten Quaderballenpresse 4 über ihren Zapfwellenstummel 14 mit einer Antriebswelle 15 der Quaderballenpresse 4 antriebsverbunden, die eine Komponente eines Antriebsstrangs 16 der Quaderballenpresse 4 darstellt. Zur Verbindung der Zapfwelle 13 und der Antriebswelle 15 der Quaderballenpresse 4 kann eine Gelenkwelle17 eingesetzt werden. Die Antriebswelle 15 der Quaderballenpresse 4 überträgt die von der Zapfwelle 13 übertragene Antriebsleistung an ein Arbeitsaggregat 18 der Quaderballenpresse 4. Es kann sich statt nur eines Arbeitsaggregats 18 gleichsam um eine Vielzahl von Arbeitsaggregaten 18 handeln, die auf diese Weise über die Zapfwelle 13 des Traktors 2 angetrieben werden. Neben der Antriebswelle 15 umfasst der Antriebsstrang 16 der Quaderballenpresse 4 ein Schwungrad 19 sowie optional einen Freilauf 20 und/oder eine Überlastkupplung 21 zum Schutz der Antriebsstrangkomponenten des Traktors 2. Die Getriebeeingangswelle 12 des Zapfwellengetriebes 10 ist über eine erste schaltbare Getriebegangstufe 22 oder eine zweite schaltbare Getriebegangstufe 23 mit der Zapfwelle 13 in Antriebsverbindung bringbar. Das Zapfwellengetriebe 10 umfasst weiterhin eine Schalteinrichtung 24, die dazu eingerichtet ist, zwischen der ersten Getriebegangstufe 22, der zweiten Getriebegangstufe 23 und einer Neutralstellung N des Zapfwellengetriebes 10 - die in FIG. 2 dargestellt ist - zu schalten. Die Schalteinrichtung 24 ist vorzugsweise als Schaltmuffe ausgebildet. Das Zapfwellengetriebe 10 umfasst neben der Schalteinrichtung 24 noch eine mit der Getriebeeingangswelle 12 in Wirkverbindung stehende und der Zapfwelle 13 des Zapfwellengetriebes 10 über das Zuschalten der ersten oder der zweiten Getriebegangstufe 22, 23 in Wirkverbindung bringbare Bremseinrichtung 25.

FIG. 2 zeigt eine bevorzugte Ausführungsform eines erfindungsgemäßen Zapfwellengetriebes 10 mit der ersten und der zweiten Getriebegangstufe 22, 23. Die erste Getriebegangstufe 22 und die zweite Getriebegangstufe 23 sind jeweils als Stirnradstufe mit einem auf der Getriebeeingangswelle 12 angeordneten Festrad 26.1, 27.1 und einem auf der Zapfwelle 13 angeordneten Losrad 26.2, 27.2 ausgebildet. Die erste Getriebegangstufe 22 ist vorzugsweise eine 540er-Zapfwellengangstufe, die zweite Getriebegangstufe 23 vorzugsweise eine 1000er-Zapfwellengangstufe. Das Zapfwellengetriebe 10 kann auch andere Architekturen aufweisen. Gemäß einer weiteren - in den FIGs. nicht dargestellten - Ausführungsform umfasst das Zapfwellengetriebe 10 beispielsweise eine dritte Getriebegangstufe und eine vierte Getriebegangstufe, wobei die Schalteinrichtung 24 dazu eingerichtet ist, zwischen der ersten Getriebegangstufe 22, der zweiten Getriebegangstufe 23, der dritten Getriebegangstufe, der vierten Getriebegangstufe und der Neutralstellung N des Zapfwellengetriebes 10 zu schalten. Vorzugsweise ist die dritte Getriebegangstufe eine 540erE-Zapfwellengangstufe und die vierte Getriebegangstufe eine 1000erE-Zapfwellengangstufe. Gemäß einer weiteren - in den FIGs. nicht dargestellten - Ausführungsform umfasst das Zapfwellengetriebe 10 beispielsweise zusätzlich noch eine fünfte Getriebegangstufe, wobei die Schalteinrichtung 24 dann dazu eingerichtet ist, zwischen der ersten Getriebegangstufe 22, der zweiten Getriebegangstufe 23, der dritten Getriebegangstufe, der vierten Getriebegangstufe, der fünften Getriebegangstufe und der Neutralstellung N des Zapfwellengetriebes 10 zu schalten. Vorzugsweise ist die fünfte Getriebegangstufe eine 1300er-Zapfwellengangstufe. Gemäß einer weiteren - in den FIGs. ebenfalls nicht dargestellten - Ausführungsform ist es möglich, dass das Zapfwellengetriebe 10 über eine mechanische Synchronisationseinrichtung verfügt. So kann die Schalteinrichtung 24 beispielsweise Synchronisierungselemente umfassen, die es erlauben, die Getriebeeingangswelle 12 mit der Zapfwelle 13 unter Berücksichtigung der entsprechenden einzulegenden Getriebegangstufe zu synchronisieren.

Wie eingangs geschildert, stellt der Anlaufvorgang einer an den Traktor 2 angebauten Quaderballenpresse 4 mit einem hohen Trägheitsmoment aufgrund einer hohen Schwungradmasse oftmals eine erhebliche Herausforderung dar, insbesondere für solche Traktoren 2 mit einem Zapfwellengetriebe 10, das an und für sich nicht unter Last schaltbar ist. Um dieser Herausforderung zu begegnen, ist erfindungsgemäß eine Steuereinrichtung 28 vorgesehen, die mit dem Antriebsmotor 5, der schaltbaren Kupplung 11, der Schalteinrichtung 24 und der Bremseinrichtung 25 verbunden ist und mittels der das Zapfwellengetriebe 10 unabhängig von der Architektur geschaltet werden kann, ohne hierfür zwangsläufig zusätzliche mechanische Komponenten, wie beispielsweise die angesprochenen Synchronisierungselemente, vorzusehen. Verbunden bedeutet in diesem Zusammenhang, dass zwischen der Steuereinrichtung 28 und den zuvor genannten Einrichtungen Daten und Steuersignale übertragen werden können. Die Übertragung kann sowohl kabelgebunden, beispielsweise über ein Datenbussystem (z.B. ISOBUS) als auch drahtlos erfolgen. Die Steuereinrichtung 28 kann mit weiteren Einrichtungen, insbesondere Sensoreinrichtungen des Traktors 2 und/oder der Quaderballenpresse 4, in Verbindung stehen.

Die Steuereinrichtung 28 ist erfindungsgemäß dazu eingerichtet, während des Antriebs der an den Traktor 2 angebauten Quaderballenpresse 4 für einen Schaltvorgang aus der ersten Getriebegangstufe 22 in die zweite Getriebegangstufe 23 in Abhängigkeit einer Zapfwellendrehzahl wahlweise entweder den Antriebsmotor 5 zur Drehzahländerung oder die Bremseinrichtung 25 zum Bremsen der Getriebeeingangswelle 12 und der Zapfwelle 13 anzusteuern. Mittels der Ansteuerung durch die Steuereinrichtung 28 wird demnach eine für den Schaltvorgang aus der ersten Getriebegangstufe 22 in die zweite Getriebegangstufe 23 unter Last erforderliche Synchronisation der Getriebeeingangswelle 12 und der Zapfwelle 13 vorgenommen. Legt man die in FIG. 2 dargestellte Architektur des Zapfwellengetriebes 10 zugrunde, so steuert die Steuereinrichtung 28 für diesen Schaltvorgang aus der ersten Getriebegangstufe 22 in die zweite Getriebegangstufe 23 entweder den Antriebsmotor 5 derart an, dass die Drehzahl des auf der Zapfwelle 13 angeordneten Losrads 27.1 der zweiten Getriebegangstufe 22 zumindest im Wesentlichen mit der Zapfwellendrehzahl übereinstimmt, oder die Bremseinrichtung 25 derart an, dass die Getriebeeingangswelle 12 und die Zapfwelle 13 bis zum Stillstand gebremst werden, die Drehzahl beider Wellen 12, 13 also $0 \frac{1}{min}$ beträgt.

Die Wahl, ob der Antriebsmotor 5 oder die Bremseinrichtung 25 zwecks der Synchronisation angesteuert wird, ist abhängig von dem Betrag der Zapfwellendrehzahl. Mit anderen Worten, es wird ein Grenzwert für die Zapfwellendrehzahl definiert. Die Steuereinrichtung 28 berücksichtigt diesen definierten Grenzwert, indem sie den definierten Grenzwert mit der bestimmten Zapfwellendrehzahl vergleicht. Bei einem Unterschreiten des definierten Grenzwerts durch die bestimmte Zapfwellendrehzahl wird die Bremseinrichtung 25 von der Steuereinrichtung 28 angesteuert. Sofern der definierte Grenzwert nicht unterschritten wird, wird hingegen der Antriebsmotor 5 von der Steuereinrichtung 28 angesteuert.

Der Schaltvorgang aus der ersten Getriebegangstufe 22 in die zweite Getriebegangstufe 23 umfasst ein Schalten aus der ersten Getriebegangstufe 22 in die Neutralstellung N des Zapfwellengetriebes 10 und aus der Neutralstellung N des Zapfwellengetriebes 10 in die zweite Getriebegangstufe 23. Die für die Wahl der Ansteuerung erforderliche Bestimmung der Zapfwellendrehzahl erfolgt in der Neutralstellung N des Zapfwellengetriebes 10. Hierzu ist die Steuereinrichtung 28 mit einem - in den FIGs. nicht dargestellten - Drehzahlsensor verbunden, der die Zapfwellendrehzahl in der Neutralstellung N des Zapfwellengetriebes 10 misst. Die Steuereinrichtung 28 kann weiterhin mit mindestens einer zweiten - in den FIGs. nicht dargestellten - Sensoreinrichtung verbunden sein, mittels der die Drehzahl des Antriebsmotors 5 oder die Drehzahl der Getriebeeingangswelle 12 des Zapfwellengetriebes 10 gemessen werden kann. Die Ansteuerung des Antriebsmotors 5 oder der Bremseinrichtung 25 zwecks der Synchronisation erfolgt ebenfalls in der Neutralstellung N des Zapfwellengetriebes 5 mittels der Steuereinrichtung 28. Für die Durchführung des Schaltvorgangs aus der ersten Getriebegangstufe 22 in die zweite Getriebegangstufe 23 ist die Steuereinrichtung 28 dazu eingerichtet, die Kupplung 11 derart anzusteuern, dass die Kupplung 11 unmittelbar vor einem Schalten aus der ersten Getriebegangstufe 22 in die Neutralstellung N des Zapfwellengetriebes 10 geöffnet wird und wahlweise in der Neutralstellung N des Zapfwellengetriebes 10 oder nach einem Schalten aus der Neutralstellung N des Zapfwellengetriebes 10 in die zweite Getriebegangstufe 23 geschlossen wird.

Ein Verfahren zum Antreiben einer an den Traktor 2 angebauten Quaderballenpresse 4 kann unter Berücksichtigung der zuvor beschriebenen Komponenten bzw. Einrichtungen und Funktionen gemäß der zwei folgenden Varianten ablaufen, wobei beiden Varianten zunächst die folgenden Verfahrensschritte gemein sind:

Zunächst wird über die Steuereinrichtung 28 die Schalteinrichtung 24 derart angesteuert, dass die erste Getriebegangstufe 22 eingelegt wird. Die erste Getriebegangstufe 22 ist vorzugsweise eine 540er-Zapfwellengangstufe. Der Antriebsmotor 5 des Traktors 2 wird mittels einer Ansteuerung durch die Steuereinrichtung 28 auf seine Nenndrehzahl oder seine maximale Drehzahl beschleunigt, wodurch an der Zapfwelle 13 entsprechend des Übersetzungsverhältnisses der ersten Getriebegangstufe 22 eine Standarddrehzahl, vorzugsweise $540 \frac{1}{min}$ oder größer, anliegt. Sobald der Anlaufvorgang der Quaderballenpresse 4 abgeschlossen ist, was beispielsweise über einen mit der Steuereinrichtung 28 verbundenen - in den FIGs. nicht dargestellten - Drehzahlsensor, der eine Drehzahl der Antriebswelle 15 der Quaderballenpresse 4 bestimmt, erfolgen kann, steuert die Steuereinrichtung 28 die die Kupplung 11 derart an, dass diese geöffnet wird. Die Steuereinrichtung 28 steuert die Schalteinrichtung 24 anschließend derart an, dass das Zapfwellengetriebe 10 in die Neutralstellung N gebracht wird. Nun schließen sich entsprechend der an der Zapfwelle 13 anliegenden Drehzahl in der Neutralstellung N des Zapfwellengetriebes 10, wahlweise die folgenden Verfahrensschritte an:

Sofern die Zapfwellendrehzahl in der Neutralstellung N des Zapfwellengetriebes 10 im Wesentlichen unverändert bzw. oberhalb oder gleich des definierten Grenzwerts für die Zapfwellendrehzahl bleibt, steuert die Steuereinrichtung 28 die Kupplung 11 derart an, dass diese geschlossen wird. Die Steuereinrichtung 28 steuert dann den Antriebsmotor 5 in Abhängigkeit der Zapfwellendrehzahl derart an, dass die Drehzahl des Antriebsmotors 5 entsprechend so angepasst wird, dass eine Synchronisation der Getriebeeingangswelle 12 und der Zapfwelle 13 unter Berücksichtigung der zweiten Getriebegangstufe 23, die vorzugsweise eine 1000er-Zapfwellengangstufe ist, erfolgt. Sobald die Synchronisation abgeschlossen ist, steuert die Steuereinrichtung 28 die Schalteinrichtung 24 derart an, dass die zweite Getriebegangstufe 23 eingelegt wird. Die Steuereinrichtung 28 steuert den Antriebsmotor 5 anschließend derart an, dass dieser auf seine Nenndrehzahl beschleunigt wird, wodurch an der Zapfwelle 13 entsprechend des Übersetzungsverhältnisses der zweiten Getriebegangstufe 23 eine Standarddrehzahl, vorzugsweise $1000 \frac{1}{min}$, anliegt. Optional ist es möglich, dass die Steuereinrichtung 28 die Kupplung 11 noch einmal derart ansteuert, dass diese zunächst vor dem Schaltvorgang in die zweite Getriebegangstufe 23 geöffnet wird und nach dem Schaltvorgang in die zweite Getriebegangstufe 23 geschlossen wird.

Sofern die Zapfwellendrehzahl hingegen in der Neutralstellung N des Zapfwellengetriebes 10 zu stark abfällt bzw. der definierte Grenzwert für die Zapfwellendrehzahl unterschreitet, steuert die Steuereinrichtung 28 die Bremseinrichtung 25 derart an, dass sowohl die Getriebeeingangswelle 12 als auch die Zapfwelle 13 bis zum Stillstand, also auf eine Drehzahl von $0 \frac{1}{min}$, gebremst werden. Sobald dieser Synchronisationsvorgang abgeschlossen ist, steuert die Steuereinrichtung 28 die Schalteinrichtung 24 derart an, dass die zweite Getriebegangstufe 23, vorzugsweise ebenfalls die 1000er-Zapfwellengangstufe, eingelegt wird. Die Steuereinrichtung 28 steuert anschließend die Kupplung 11 derart an, dass diese wieder geschlossen wird. Dann steuert die Steuereinrichtung 28 den Antriebsmotor 5 derart an, dass dieser auf seine Nenndrehzahl beschleunigt wird, wodurch an der Zapfwelle 13 entsprechend des Übersetzungsverhältnisses der zweiten Getriebegangstufe 23 eine Standarddrehzahl, vorzugsweise ebenfalls $1000 \frac{1}{min}$, anliegt.

Wie in der FIG. 1 dargestellt, kann die Steuereinrichtung 28 Teil eines übergeordneten Maschinensteuerungssystems 29 sein und mit diesem in Informationsaustausch stehen. Das Maschinensteuerungssystem 29 einschließlich der Steuereinrichtung 28 ist vorzugsweise über ein in der Fahrerkabine des Traktors 2 angeordnetes Bedienterminal 30 für einen Bediener des Traktors 2 zugänglich. Der Bediener kann an dem Bedienterminal 30 einerseits vielfältige Informationen über Betriebsparameter des Traktors 2 und der Quaderballenpresse 4 abrufen. Weiterhin kann der Bediener über das Bedienterminal 30 vielfältige Einstellungen vornehmen sowie Funktionen auslösen. Hierzu zählen beispielsweise das Auslösen von Hydraulikfunktionen, Lenkfunktionen und dergleichen. Es kann weiterhin vorgesehen sein, dass auch Funktionen der Quaderballenpresse 4 darüber bedienbar sind. Über das Maschinensteuerungssystem 29 werden demnach vielfältige Steuerungs- und Regelungsvorgänge des Traktors 2 und vorzugsweise auch der Quaderballenpresse 4 koordiniert. Bedarfsweise kann das Maschinensteuerungssystem 29 dabei auch auf Informationen über die jeweils gewählte Getriebegangstufe des Zapfwellengetriebes 10 zurückgreifen, um unter Berücksichtigung dieser Informationen weitere Maschineneinstellungen am Traktor 2 und/oder der Quaderballenpresse 4 zu beeinflussen.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

**Bezugszeichenliste**

| | | | |
|---|---|---|---|
| 1 | Landwirtschaftliche Arbeitsmaschine | 27.1 | Festrad |
| | | 27.2 | Losrad |
| 2 | Traktor | 28 | Steuereinrichtung |
| 3 | Arbeitsgerät | 29 | Maschinensteuerungssystem |
| 4 | Quaderballenpresse | 30 | Bedienterminal |
| 5 | Antriebsmotor | | |
| 6 | Fahrgetriebe | | |
| 7 | Vorderachse | | |
| 8 | Hinterachse | | |
| 9 | Welle | | |
| 10 | Zapfwellengetriebe | | |
| 11 | Schaltbare Kupplung | | |
| 12 | Getriebeeingangswelle | | |
| 13 | Zapfwelle | | |
| 14 | Zapfwellenstummel | | |
| 15 | Antriebswelle des Arbeitsgeräts | | |
| 16 | Antriebsstrang des Arbeitsgeräts | | |
| 17 | Gelenkwelle | | |
| 18 | Arbeitsaggregat des Arbeitsgeräts | | |
| 19 | Schwungrad | | |
| 20 | Freilauf | | |
| 21 | Überlastkupplung | | |
| 22 | Erste Getriebegangstufe | | |
| 23 | Zweite Getriebegangstufe | | |
| 24 | Schalteinrichtung | | |
| 25 | Bremseinrichtung | | |
| 26.1 | Festrad | | |
| 26.2 | Losrad | | |

## Patentansprüche

1. Landwirtschaftliche Arbeitsmaschine (1), insbesondere Traktor (2), mit einem Antriebsmotor (5) und einem Zapfwellengetriebe (10), die mittels einer schaltbaren Kupplung (11) miteinander verbunden sind, wobei das Zapfwellengetriebe (10) eine Getriebeeingangswelle (12) und eine als Zapfwelle ausgebildete Getriebeausgangswelle (13) zum Antrieb eines an die landwirtschaftliche Arbeitsmaschine (1) anbaubaren Arbeitsgeräts (3, 4) umfasst, wobei die Getriebeeingangswelle (12) über eine erste schaltbare Getriebegangstufe (22) oder eine zweite schaltbare Getriebegangstufe (23) mit der Zapfwelle (13) in Antriebsverbindung bringbar ist, wobei das Zapfwellengetriebe (10) eine Schalteinrichtung (24), die dazu eingerichtet ist, zwischen der ersten Getriebegangstufe (22), der zweiten Getriebegangstufe (23) und einer Neutralstellung (N) des Zapfwellengetriebes (10) zu schalten, und eine mit der Getriebeeingangswelle (12) in Wirkverbindung stehende und mit der Zapfwelle (13) über das Zuschalten der ersten oder der zweiten Getriebegangstufe (22, 23) in Wirkverbindung bringbare Bremseinrichtung (25) umfasst,
**dadurch gekennzeichnet, dass**
die landwirtschaftliche Arbeitsmaschine (1) eine Steuereinrichtung (28) umfasst, die dazu eingerichtet ist, während des Antriebs eines an die landwirtschaftliche Arbeitsmaschine (1) angebauten Arbeitsgeräts (3, 4) für einen Schaltvorgang aus der ersten Getriebegangstufe (22) in die zweite Getriebegangstufe (23) in Abhängigkeit einer Zapfwellendrehzahl wahlweise entweder den Antriebsmotor (5) zur Drehzahländerung oder die Bremseinrichtung (25) zum Bremsen der Getriebeeingangswelle (12) und der Zapfwelle (13) anzusteuern.

2. Landwirtschaftliche Arbeitsmaschine (1) nach Anspruch 1, **dadurch gekennzeichnet, dass** der Schaltvorgang aus der ersten Getriebegangstufe (22) in die zweite Getriebegangstufe (23) ein Schalten aus der ersten Getriebegangstufe (22) in die Neutralstellung (N) des Zapfwellengetriebes (10) und aus der Neutralstellung (N) des Zapfwellengetriebes (10) in die zweite Getriebegangstufe (23) umfasst.

3. Landwirtschaftliche Arbeitsmaschine (1) nach Anspruch 2, **dadurch gekennzeichnet, dass** die Steuereinrichtung (28) dazu eingerichtet ist, dass ein Bestimmen der Zapfwellendrehzahl und eine Ansteuerung des Antriebsmotors (5) oder der Bremseinrichtung (25) mittels der Steuereinrichtung (28) in der Neutralstellung (N) während des Schaltvorgangs aus der ersten Getriebegangstufe (22) in die zweite Getriebegangstufe (23) erfolgt.

4. Landwirtschaftliche Arbeitsmaschine (1) nach Anspruch 2 oder 3, **dadurch gekennzeichnet, dass** die Steuereinrichtung (28) dazu eingerichtet ist, die Kupplung (11) für den Schaltvorgang aus der ersten Getriebegangstufe (22) in die zweite Getriebegangstufe (23) derart anzusteuern, dass die Kupplung (11) unmittelbar vor einem Schalten aus der ersten Getriebegangstufe (22) in die Neutralstellung (N) des Zapfwellengetriebes (10) geöffnet ist und wahlweise in der Neutralstellung (N) des Zapfwellengetriebes (10) oder nach einem Schalten aus der Neutralstellung (N) des Zapfwellengetriebes (10) in die zweite Getriebegangstufe (23) geschlossen ist.

5. Landwirtschaftliche Arbeitsmaschine (1) nach einem der Ansprüche 1 bis 4, **dadurch gekennzeichnet, dass** die erste Getriebegangstufe (22) und die zweite Getriebegangstufe (23) jeweils als Stirnradstufe mit einem Festrad (26.1, 27.1) und einem Losrad (26.2, 27.2) ausgebildet sind, wobei das Festrad (26.1, 27.1) wahlweise auf der Getriebeeingangswelle (12) oder der Zapfwelle (13) und das Losrad (26.2, 27.2) entsprechend wahlweise auf der Zapfwelle (13) oder der Getriebeeingangswelle (12) angeordnet ist, wobei, insbesondere, das Festrad (26.1, 27.1) auf der Getriebeeingangswelle (12) und das Losrad (26.2, 27.2) auf der Zapfwelle (13) angeordnet ist.

6. Landwirtschaftliche Arbeitsmaschine (1) nach Anspruch 5, **dadurch gekennzeichnet, dass** die Steuereinrichtung (28) dazu eingerichtet ist, für den Schaltvorgang aus der ersten Getriebegangstufe (22) in die zweite Getriebegangstufe (23) den Antriebsmotor (5) derart anzusteuern, dass eine Drehzahl des der zweiten Getriebegangstufe (23) zugeordneten Losrads (27.2) zumindest im Wesentlichen mit der Zapfwellendrehzahl übereinstimmt.

7. Landwirtschaftliche Arbeitsmaschine (1) nach einem der Ansprüche 1 bis 6, **dadurch gekennzeichnet, dass** die Steuereinrichtung (28) dazu eingerichtet ist, für den Schaltvorgang aus der ersten Getriebegangstufe (22) in die zweite Getriebegangstufe (23) die Bremseinrichtung (25) derart anzusteuern, dass eine Drehzahl der Getriebeeingangswelle (12) und die Zapfwellendrehzahl $0 \frac{1}{min}$ beträgt.

8. Landwirtschaftliche Arbeitsmaschine (1) nach einem der Ansprüche 1 bis 7, **dadurch gekennzeichnet, dass** die erste Getriebegangstufe (22) eine 540er- oder 540erE-Zapfwellengangstufe ist und die zweite Getriebegangstufe (23) eine 1000er- oder 1000erE-Zapfwellengangstufe ist.

9. Landwirtschaftliche Arbeitsmaschine (1) nach einem der Ansprüche 1 bis 8, **dadurch gekennzeichnet, dass** die Steuereinrichtung (28) dazu eingerichtet, einen definierten Grenzwert für die Zapfwellendrehzahl zu berücksichtigen, wobei die Steuereinrichtung ferner dazu eingerichtet ist, den Antriebsmotor (5) anzusteuern, sofern die Zapfwellendrehzahl dem definierten Grenzwert entspricht oder diesen übersteigt, oder die Bremseinrichtung (25) anzusteuern, sofern die Zapfwellendrehzahl den definierten Grenzwert unterschreitet.

10. Landwirtschaftliche Arbeitsmaschine (1) nach einem der Ansprüche 1 bis 9, **dadurch gekennzeichnet, dass** die Steuereinrichtung (28) mit einer ersten Sensoreinrichtung zum Bestimmen der Zapfwellendrehzahl und zumindest einer zweiten Sensoreinrichtung zum Bestimmen einer Drehzahl des Antriebsmotors (5) und/oder einer Drehzahl der Getriebeeingangswelle (12) verbunden ist.

11. Landwirtschaftliche Arbeitsmaschine (1) nach einem der Ansprüche 1 bis 10, **dadurch gekennzeichnet, dass** die Kupplung (11) als Reibkupplung, vorzugsweise als Lamellenkupplung, ausgebildet ist.

12. Landwirtschaftliche Arbeitsmaschine (1) nach einem der Ansprüche 1 bis 11, **dadurch gekennzeichnet, dass** die Schalteinrichtung (24) Synchronisierungselemente umfasst.

13. Landwirtschaftliche Arbeitsmaschine (1) nach einem der Ansprüche 1 bis 12, **dadurch gekennzeichnet, dass** das Zapfwellengetriebe (10) eine dritte Getriebegangstufe und eine vierte Getriebegangstufe umfasst, wobei die Schalteinrichtung (24) dazu eingerichtet ist, zwischen der ersten Getriebegangstufe (22), der zweiten Getriebegangstufe (23), der dritten Getriebegangstufe, der vierten Getriebegangstufe und der Neutralstellung (N) des Zapfwellengetriebes (10) zu schalten, wobei, vorzugsweise, das Zapfwellengetriebe (10) eine fünfte Getriebegangstufe umfasst, wobei die Schalteinrichtung (24) dazu eingerichtet ist, zwischen der ersten Getriebegangstufe (22), der zweiten Getriebegangstufe (23), der dritten Getriebegangstufe, der vierten Getriebegangstufe, der fünften Getriebegangstufe und der Neutralstellung (N) des Zapfwellengetriebes (10) zu schalten.

14. Landwirtschaftliche Arbeitsmaschine (1) nach Anspruch 13, **dadurch gekennzeichnet, dass** die dritte Getriebegangstufe eine 540erE-Zapfwellengangstufe ist und die vierte Getriebegangstufe eine 1000erE-Zapfwellengangstufe ist, wobei, vorzugsweise, die fünfte Getriebegangstufe eine 1300er-Zapfwellengangstufe ist.

15. Kombination aus einer landwirtschaftlichen Arbeitsmaschine (1), insbesondere einem Traktor (2), und einem an die landwirtschaftliche Arbeitsmaschine (1) angebauten Arbeitsgerät (3), insbesondere einer Quaderballenpresse (4), **dadurch gekennzeichnet, dass** die landwirtschaftliche Arbeitsmaschine (1) nach einem der Ansprüche 1 bis 14 ausgebildet ist.

## Claims

1. Agricultural working machine (1), in particular a tractor (2), having a drive motor (5) and a power-take-off-shaft transmission (10) which are connected to one another by means of a switchable clutch (11), wherein the power-take-off-shaft transmission (10) comprises a transmission input shaft (12) and a transmission output shaft (13), in the form of a power-take-off shaft, for driving a working implement (3, 4) which is attachable to the agricultural working machine (1), wherein the transmission input shaft (12) is able to be brought into drive connection with the power-take-off shaft (13) via a first switchable transmission gear stage (22) or a second switchable transmission gear stage (23), wherein the power-take-off-shaft transmission (10) comprises a switching device (24), which is configured to switch between the first transmission gear stage (22), the second transmission gear stage (23) and a neutral position (N) of the power-take-off-shaft transmission (10), and a brake device (25), which is in operative connection with the transmission input shaft (12) and is able to be brought into operative connection with the power-take-off shaft (13) via activation of the first or second transmission gear stage (22, 23),
**characterized in that**
the agricultural working machine (1) comprises a control device (28) which is configured such that, while a working implement (3, 4) attached to the agricultural working machine (1) is being driven, for a switching operation from the first transmission gear stage (22) into the second transmission gear stage (23), it selectively controls, according to a power-take-off-shaft rotational speed, either the drive motor (5) for rotational-speed-changing purposes or the brake device (25) for braking the transmission input shaft (12) and the power-take-off shaft (13).

2. Agricultural working machine (1) according to Claim 1, **characterized in that** the switching operation from the first transmission gear stage (22) into the second transmission gear stage (23) comprises switching from the first transmission gear stage (22) into the neutral position (N) of the power-take-off-shaft transmission (10) and from the neutral position (N) of the power-take-off-shaft transmission (10) into the second transmission gear stage (23).

3. Agricultural working machine (1) according to Claim 2, **characterized in that** the control device (28) is configured such that a determination of the power-take-off-shaft rotational speed and control of the drive motor (5) or the brake device (25) by means of the control device (28) is realized in the neutral position (N) during the switching operation from the first transmission gear stage (22) into the second transmission gear stage (23).

4. Agricultural working machine (1) according to Claim 2 or 3, **characterized in that** the control device (28) is configured to control the clutch (11) for the switching operation from the first transmission gear stage (22) into the second transmission gear stage (23) in such a way that the clutch (11) is open immediately before a switch from the first transmission gear stage (22) into the neutral position (N) of the power-take-off-shaft transmission (10) and is selectively closed in the neutral position (N) of the power-take-off-shaft transmission (10) or after a switch from the neutral position (N) of the power-take-off-shaft transmission (10) into the second transmission gear stage (23).

5. Agricultural working machine (1) according to one of Claims 1 to 4, **characterized in that** the first transmission gear stage (22) and the second transmission gear stage (23) are each designed as a spur-gear stage with a fixed gear (26.1, 27.1) and a floating gear (26.2, 27.2), wherein the fixed gear (26.1, 27.1) is selectively arranged on the transmission input shaft (12) or the power-take-off shaft (13) and the floating gear (26.2, 27.2) is correspondingly selectively arranged on the power-take-off shaft (13) or the transmission input shaft (12), wherein in particular the fixed gear (26.1, 27.1) is arranged on the transmission input shaft (12) and the floating gear (26.2, 27.2) is arranged on the power-take-off shaft (13).

6. Agricultural working machine (1) according to Claim 5, **characterized in that** the control device (28) is configured such that, for the switching operation from the first transmission gear stage (22) into the second transmission gear stage (23), it controls the drive motor (5) in such a way that a rotational speed of the floating gear (27.2) assigned to the second transmission gear stage (23) corresponds at least substantially to the power-take-off-shaft rotational speed.

7. Agricultural working machine (1) according to one of Claims 1 to 6, **characterized in that** the control device (28) is configured such that, for the switching operation from the first transmission gear stage (22) into the second transmission gear stage (23), it controls the brake device (25) in such a way that a rotational speed of the transmission input shaft (12) and the power-take-off-shaft rotational speed is $0 \frac{1}{min}$.

8. Agricultural working machine (1) according to one of Claims 1 to 7, **characterized in that** the first transmission gear stage (22) is a 540-rpm or 540-rpm economy power-take-off-shaft gear stage and the second transmission gear stage (23) is a 1000-rpm or 1000-rpm economy power-take-off-shaft gear stage.

9. Agricultural working machine (1) according to one of Claims 1 to 8, **characterized in that** the control device (28) is configured to take into account a defined limit value for the power-take-off-shaft rotational speed, wherein the control device is furthermore configured to control the drive motor (5) if the power-take-off-shaft rotational speed corresponds to or exceeds the defined limit value, or to control the brake device (25) if the power-take-off-shaft rotational speed falls below the defined limit value.

10. Agricultural working machine (1) according to one of Claims 1 to 9, **characterized in that** the control device (28) is connected to a first sensor device for determining the power-take-off-shaft rotational speed and to at least one second sensor device for determining a rotational speed of the drive motor (5) and/or a rotational speed of the transmission input shaft (12).

11. Agricultural working machine (1) according to one of Claims 1 to 10, **characterized in that** the clutch (11) is designed as a friction clutch, preferably as a multiplate clutch.

12. Agricultural working machine (1) according to one of Claims 1 to 11, **characterized in that** the switching device (24) comprises synchronization elements.

13. Agricultural working machine (1) according to one of Claims 1 to 12, **characterized in that** the power-take-off-shaft transmission (10) comprises a third transmission gear stage and a fourth transmission gear stage, wherein the switching device (24) is configured to switch between the first transmission gear stage (22), the second transmission gear stage (23), the third transmission gear stage, the fourth transmission gear stage and the neutral position (N) of the power-take-off-shaft transmission (10), wherein preferably the power-take-off-shaft transmission (10) comprises a fifth transmission gear stage, wherein the switching device (24) is configured to switch between the first transmission gear stage (22), the second transmission gear stage (23), the third transmission gear stage, the fourth transmission gear stage, the fifth transmission gear stage and the neutral position (N) of the power-take-off-shaft transmission (10).

14. Agricultural working machine (1) according to Claim 13, **characterized in that** the third transmission gear stage is a 540-rpm economy power-take-off-shaft gear stage and the fourth transmission gear stage is a 1000-rpm economy power-take-off-shaft gear stage, wherein preferably the fifth transmission gear stage is a 1300-rpm power-take-off-shaft gear stage.

15. Combination of an agricultural working machine (1), in particular a tractor (2), and a working implement (3) attached to the agricultural working machine (1), in particular a square baler (4), **characterized in that** the agricultural working machine (1) is designed according to one of Claims 1 to 14.

## Revendications

1. Machine de travail agricole (1), notamment tracteur (2), comprenant un moteur d'entraînement (5) et une boîte de prise de force (10), qui sont reliés entre eux au moyen d'un embrayage commutable (11), la boîte de prise de force (10) comprenant un arbre d'entrée de boîte (12) et un arbre de sortie de boîte (13) configuré en tant que prise de force pour entraîner un outil de travail (3, 4) pouvant être monté sur la machine de travail agricole (1), l'arbre d'entrée de boîte (12) pouvant être mis en liaison d'entraînement avec la prise de force (13) via un premier rapport de boîte commutable (22) ou un deuxième rapport de boîte commutable (23), la boîte de prise de force (10) comprenant un appareil de commutation (24), conçu pour commuter entre le premier rapport de boîte (22), le deuxième rapport de boîte (23) et une position neutre (N) de la boîte de prise de force (10), ainsi qu'un appareil de freinage (25) en liaison fonctionnelle avec l'arbre d'entrée de boîte (12) et pouvant être mis en liaison fonctionnelle avec la prise de force (13) par l'enclenchement du premier ou du deuxième rapport de boîte (22, 23),
**caractérisée en ce que**
la machine de travail agricole (1) comprenant un appareil de commande (28), conçu pour, pendant l'entraînement d'un outil de travail (3, 4) monté sur la machine de travail agricole (1), pour une opération de commutation du premier rapport de boîte (22) vers le deuxième rapport de boîte (23), commander sélectivement, en fonction d'une vitesse de rotation de la prise de force, soit le moteur d'entraînement (5) afin de modifier la vitesse de rotation, soit l'appareil de freinage (25) afin de freiner l'arbre d'entrée de boîte (12) et la prise de force (13).

2. Machine de travail agricole (1) selon la revendication 1, **caractérisée en ce que** l'opération de commutation du premier rapport de boîte (22) vers le deuxième rapport de boîte (23) comprend une commutation du premier rapport de boîte (22) vers la position neutre (N) de la boîte de prise de force (10) et de la position neutre (N) de la boîte de prise de force (10) vers le deuxième rapport de boîte (23).

3. Machine de travail agricole (1) selon la revendication 2, **caractérisée en ce que** l'appareil de commande (28) est conçu de telle sorte qu'une détermination de la vitesse de rotation de la prise de force et une commande du moteur d'entraînement (5) ou de l'appareil de freinage (25) au moyen de l'appareil de commande (28) sont effectuées dans la position neutre (N) pendant l'opération de commutation du premier rapport de boîte (22) vers le deuxième rapport de boîte (23).

4. Machine de travail agricole (1) selon la revendication 2 ou 3, **caractérisée en ce que** l'appareil de commande (28) est conçu pour commander l'embrayage (11), pour l'opération de commutation du premier rapport de boîte (22) vers le deuxième rapport de boîte (23), de telle sorte que l'embrayage (11) est ouvert immédiatement avant une commutation du premier rapport de boîte (22) vers la position neutre (N) de la boîte de prise de force (10) et est fermé, au choix, dans la position neutre (N) de la boîte de prise de force (10) ou après une commutation de la position neutre (N) de la boîte de prise de force (10) vers le deuxième rapport de boîte (23).

5. Machine de travail agricole (1) selon l'une des revendications 1 à 4, **caractérisée en ce que** le premier rapport de boîte (22) et le deuxième rapport de boîte (23) sont chacun réalisés sous la forme d'un étage à engrenages cylindriques comprenant une roue fixe (26.1, 27.1) et une roue folle (26.2, 27.2), la roue fixe (26.1, 27.1) étant disposée, au choix, sur l'arbre d'entrée de boîte (12) ou sur la prise de force (13), et la roue folle (26.2, 27.2) étant disposée en conséquence, au choix, sur la prise de force (13) ou sur l'arbre d'entrée de boîte (12), la roue fixe (26.1, 27.1) étant, notamment, disposée sur l'arbre d'entrée de boîte (12) et la roue folle (26.2, 27.2) sur la prise de force (13).

6. Machine de travail agricole (1) selon la revendication 5, **caractérisée en ce que** l'appareil de commande (28) est conçu pour, lors de l'opération de commutation du premier rapport de boîte (22) vers le deuxième rapport de boîte (23), commander le moteur d'entraînement (5) de telle sorte qu'une vitesse de rotation de la roue folle (27.2) associée au deuxième rapport de boîte (23) corresponde au moins sensiblement à la vitesse de rotation de la prise de force.

7. Machine de travail agricole (1) selon l'une des revendications 1 à 6, **caractérisée en ce que** l'appareil de commande (28) est conçu pour, lors de l'opération de commutation du premier rapport de boîte (22) vers le deuxième rapport de boîte (23), commander l'appareil de freinage (25) de telle sorte qu'une vitesse de rotation de l'arbre d'entrée de boîte (12) et la vitesse de rotation de la prise de force soit $0 \frac{1}{min}$.

8. Machine de travail agricole (1) selon l'une des revendications 1 à 7, **caractérisée en ce que** le premier rapport de boîte (22) est un rapport de prise de force 540 ou 540E et le deuxième rapport de boîte (23) est un rapport de prise de force 1000 ou 1000E.

9. Machine de travail agricole (1) selon l'une des revendications 1 à 8, **caractérisée en ce que** l'appareil de commande (28) est conçu pour prendre en compte une valeur limite définie pour la vitesse de rotation de la prise de force, l'appareil de commande étant en outre conçu pour commander le moteur d'entraînement (5) lorsque la vitesse de rotation de la prise de force est égale ou supérieure à la valeur limite définie, ou pour commander l'appareil de freinage (25) lorsque la vitesse de rotation de la prise de force est inférieure à la valeur limite définie.

10. Machine de travail agricole (1) selon l'une des revendications 1 à 9, **caractérisée en ce que** l'appareil de commande (28) est relié à un premier dispositif de capteur destiné à déterminer la vitesse de rotation de la prise de force et à au moins un deuxième dispositif de capteur destiné à déterminer une vitesse de rotation du moteur d'entraînement (5) et/ou une vitesse de rotation de l'arbre d'entrée de boîte (12).

11. Machine de travail agricole (1) selon l'une des revendications 1 à 10, **caractérisée en ce que** l'embrayage (11) est réalisé sous la forme d'un embrayage à friction, de préférence d'un embrayage à lamelles.

12. Machine de travail agricole (1) selon l'une des revendications 1 à 11, **caractérisée en ce que** l'appareil de commutation (24) comprend des éléments de synchronisation.

13. Machine de travail agricole (1) selon l'une des revendications 1 à 12, **caractérisée en ce que** la boîte de prise de force (10) comprend un troisième rapport de boîte et un quatrième rapport de boîte, l'appareil de commutation (24) étant conçu pour commuter entre le premier rapport de boîte (22), le deuxième rapport de boîte (23), le troisième rapport de boîte, le quatrième rapport de boîte et la position neutre (N) de la boîte de prise de force (10), la boîte de prise de force (10) comprenant, de préférence, un cinquième rapport de boîte, l'appareil de commutation (24) étant conçu pour commuter entre le premier rapport de boîte (22), le deuxième rapport de boîte (23), le troisième rapport de boîte, le quatrième rapport de boîte, le cinquième rapport de boîte et la position neutre (N) de la boîte de prise de force (10).

14. Machine de travail agricole (1) selon la revendication 13, **caractérisée en ce que** le troisième rapport de boîte est un rapport de prise de force 540E et le quatrième rapport de boîte est un rapport de prise de force 1000E, le cinquième rapport de boîte étant, de préférence, un rapport de prise de force 1300.

15. Combinaison d'une machine de travail agricole (1), notamment d'un tracteur (2), et d'un outil de travail (3) monté sur la machine de travail agricole (1), notamment d'une presse à balles cubiques (4), **caractérisée en ce que** la machine de travail agricole (1) est réalisée selon l'une des revendications 1 à 14.
